# EUROPÄISCHE PATENTANMELDUNG

(11) **EP 4 399 963 A1**
(43) Veröffentlichungstag der Anmeldung: **17.07.2024**
(21) Anmeldenummer: 24151194.8
(22) Anmeldetag: 10.01.2024
(51) Int. Cl.: A01G 24/22, A01G 24/44

(54) **ERZEUGNIS ZUM ANSIEDELN VON PFLANZEN IN EINEM GELÄNDE SOWIE VERFAHREN ZUM AUSBRINGEN DES ERZEUGNISSES**

(30) Priorität: 10.01.2023 DE 102023100426
(71) Anmelder: Aumann, Franz, 49661 Cloppenburg (DE)
(72) Erfinder: Aumann, Franz, 49661 Cloppenburg (DE)
(74) Vertreter: Jabbusch, Matthias

(57) **Zusammenfassung**

Ein Erzeugnis, welches zum Ansiedeln von Pflanzen in einem Gelände dient, hat einen Festkörper (1) aus einem Feststoffgemisch (2), welches aus einer Portion Pflanzsubstrat und wenigstens einem Bindemittel zusammengesetzt ist. Außerdem hat das Erzeugnis wenigstens einen im Inneren des Festkörpers (1) angeordneten keimfähigen Pflanzensamen (3). Das Bindemittel ist ein Gummiarabikum und der Festkörper (1) weist eine kantige Körpergeometrie auf. Zur Ausbringung des Erzeugnisses in ein Gelände wird das Erzeugnis mit Wasser durchtränkt und das durchtränkte Erzeugnis wird mittels eines Luftfahrzeuges über dem zu bewachsenden Gelände abgeworfen.

## Beschreibung

Die Erfindung betrifft ein Erzeugnis zum Ansiedeln von Pflanzen in einem Gelände, mit einem Festkörper aus einem Feststoffgemisch, welches aus einer Portion Pflanzsubstrat und wenigstens einem Bindemittel zusammengesetzt ist, und mit wenigstens einem im Inneren des Festkörpers angeordneten keimfähigen Pflanzensamen. Außerdem betrifft die Erfindung ein Verfahren zur Ausbringung eines solchen Erzeugnisses in ein Gelände.

Bisher geraten unsere Umweltbehörden kaum einmal unter Druck, wenn ganze Landstriche durch Monokulturen und Flurbereinigungen fortlaufend an Biodiversität verlieren und schließlich sogar so sehr veröden, dass sie für Land- und Forstwirtschaft nur noch eingeschränkt nutzbar sind. Das Wirtschaftswachstum unaufhörlich vorantreibende kommerzielle Interessen sind der Motor unserer Wohlstandsgesellschaft. Dieser Motor lässt sich aber nicht so einfach anhalten, denn schließlich sind auch Falschdarstellungen ein legitimes Mittel zur Durchsetzung kommerzieller Interessen und wenn die Mitarbeiter der Umweltbehörden diese Falschdarstellungen nicht als solche erkennen können, werden wir unsere Lebensgrundlage auch weiterhin ungebremst zerstören. Unsere Zukunft hängt davon ab, ob wir erkennen können, dass es in Wahrheit keine klimaneutralen Technologien gibt, dass es auf der Erde aber eine regenerationsfähige Vegetation gibt, deren Üppigkeit unsere Versicherung ist. Folglich ist es höchste Zeit zu erkennen, dass dem weltweiten Schutz unserer Wälder und dem weltweiten Wiederaufforsten von Ödland und verzichtbaren Kulturland allerhöchste Priorität beizumessen ist. Auf der Suche nach Konzepten, mit denen diese Mammutaufgabe vielleicht gelöst werden könnte, stößt man in der deutschen Offenlegungsschrift DE 199 00 180 A1 auf ein System, welches der Anzucht und Zucht von Pflanzen dient. In dieser Schrift wird ein Pflanzbehälter beschrieben, der mit trockenem Kultursubstrat gefüllt ist und durch Zufuhr von Wasser bepflanzbar wird. Der optional verschließbare Pflanzbehälter kann aus einem organischen und somit verrottbarem Material bestehen und dem darin enthaltenen trockenen Kultursubstrat können beispielsweise Samen oder Dünger beigemengt sein. Ein Verfahren zur Verwertung von Klärschlämmen wird in der internationalen Anmeldeschrift WO 89/06486 beschrieben. Das Verfahren ist insbesondere für die Anpflanzung größerer Bäume oder Sträucher in ariden Gebieten wie Wüsten und Wüstenrandgebieten geeignet. Dazu wird ein Sack aus Papier oder anderen organischen Stoffen mit einer Klärschlamm enthaltenen Bodenmischung befüllt und darin ein geeigneter Schössling oder ein Samen eingepflanzt. Auch können der Bodenmischung Mikroorganismen beigefügt werden. Der so vorbereitete Sack kann dann in eine Pflanzgrube eingesetzt werden.

Größerer Bekanntheit erfreut sich die sogenannte Samenbombe, bei der in der Regel mehrere Samen in einer handlichen Kugel aus einem lehmhaltigen Pflanzsubstrat eingeknetet werden, und diese Kugel anschließend getrocknet wird. Derartige Samenbomben werden als Wurfobjekte eingesetzt, um Pflanzensamen auf einfache Weise auch in schwer zugängliche Bereiche befördern zu können. Regnet es, verlieren die Samenbomben ihre kugelförmige Gestalt und die enthaltenen Pflanzensamen können im aufgeweichten Pflanzsubstrat aufkeimen.

Der Erfindung liegt die Aufgabe zugrunde, ein Erzeugnis mit der eingangs genannten Gattung sowie ein Verfahren zur Ausbringung des Erzeugnisses aufzuzeigen, mit denen ein großflächiges Ansiedeln von Pflanzen in einem Gelände maßgeblich vereinfacht ist.

Diese Aufgabe ist erfindungsgemäß durch ein Erzeugnis mit den Merkmalen des Patentanspruches 1 sowie durch ein Verfahren zur Ausbringung des Erzeugnisses mit den Merkmalen des Patentanspruches 7 gelöst. Vorteilhafte Weiterbildungen der Erfindung sind in den jeweils auf diese Patentansprüche rückbezogenen Unteransprüchen angegeben.

Das erfindungsgemäße Erzeugnis zeichnet sich dadurch aus, dass das Bindemittel ein Gummiarabikum ist, und dass der Festkörper eine kantige Körpergeometrie aufweist. Dabei ergeben sich für den Festkörper bei einer maximalen Beanstandung seiner Körperkanten vorteilhaft hohe Kippmomente, so dass das erfindungsgemäße Erzeugnis, einmal mit Wasser durchtränkt und in ein zu begrünendes Gelände ausgebracht, eine hohe Lagestabilität aufweist, mit welcher die Verwurzelung eines Keimlings im Erdboden des Ausbringungsortes maßgeblich verbessert ist. Zudem ermöglicht die kantige Körpergeometrie eine Ausbildung vorteilhaft großer Kontaktflächen mit dem Erdboden, welche das befeuchtete Pflanzsubstrat vor Austrocknung schützen und dem Keimling hinreichend Raum bieten, auch mit dem das erfindungsgemäße Erzeugnis aufnehmenden Erdboden zu verwurzeln.

Nach einer ersten Weiterbildung der Erfindung hat der Festkörper eine den Pflanzensamen enthaltende Vertiefung, die mit einer Plombe aus einem verfestigten Pflanzsubstrat verschlossen ist. Die Vertiefung ermöglicht die Einbringung des Pflanzensamens in das Innere des Festkörpers. Das hat den Vorteil, dass eine im Herstellungsprozess des Festkörpers erforderliche Aktivierung des Bindemittels Betriebstemperaturen oder Betriebsdrücke erlaubt, die außerhalb dessen liegen, was keimfähige Pflanzensamen schadlos überstehen können. Grundsätzlich liegt es jedoch im Rahmen der Erfindung, wenn der keimfähige Pflanzensamen in das Gemisch aus Pflanzsubstrat und Bindemittel eingebracht wird, noch bevor es zu dem Festkörper verfestigt wird.

Die kantige Körpergeometrie entspricht vorzugsweise der eines Quaders mit sechs planflächig ausgebildeten Oberflächen. Andere geeignete Körpergeometrien entsprechen der einer Pyramide mit vier planflächig ausgebildeten Oberflächen oder der eines Keils mit fünf planflächig ausgebildeten Oberflächen.

Nach einer anderen Weiterbildung der Erfindung weist das Pflanzsubstrat torffreie organische Bestandteile sowie mineralische Bestandteile auf. Dabei zielt die Verwendung der torffreien organischen Bestandteile darauf ab, dass der Handel mit Torfsubstraten in Deutschland ab dem Jahr 2026 nicht mehr gestattet ist. Die mineralischen Bestandteile fungieren vornehmlich als Wasserspeicher, aber auch als Spurenelemente- und Nährstoffspeicher.

Das erfindungsgemäße Verfahren zur Ausbringung des Erzeugnisses zeichnet sich dadurch aus, dass das Erzeugnis mit Wasser durchtränkt wird, und dass das durchtränkte Erzeugnis mittels eines Luftfahrzeuges über dem zu bewachsenden Gelände abgeworfen wird. Mit dem Durchtränken wird der Keimprozess, anders als bei den bekannten Samenbomben, bereits vor Ausbringung des erfindungsgemäßen Erzeugnisses ausgelöst. Außerdem begünstigt das Durchtränken des Erzeugnisses die Ausnutzung seiner vollen Wasseraufnahmekapazität, so dass mit dem im Erzeugnis enthaltenen Pflanzsubstrat sogar ein Wasservorratsspeicher ausgebildet ist. Mit dem Abwurf der durchtränkten Erzeugnisse aus einem Luftfahrzeug heraus besteht die Möglichkeit einer vorteilhaft großflächigen Begrünung eines Geländes, unabhängig von seiner Zugänglichkeit, insbesondere seiner Befahrbarkeit mit Radfahrzeugen. Insgesamt ermöglicht das erfindungsgemäße Verfahren bei einem Pflanzensamen eine höhere Aufkeimwahrscheinlichkeit, da er von dem durchtränkten Pflanzsubstrat nass gehalten wird und das Wasser im Materialgefüge des Feststoffgemisches verdunstungshemmend eingebunden ist.

Nach einer ersten Weiterbildung des erfindungsgemäßen Verfahrens wird das Wasser vor dem Durchtränken des Erzeugnisses mit Mikroorganismen geimpft. Die Mikroorganismen verstoffwechseln im Pflanzsubstrat enthaltene organische Bestandteile und bilden dabei das Wachstum des Keimlings fördernde Hormone. Vorzugsweise wird das Wasser mit sogenannten "effektiven Mikroorganismen" versetzt. Diese sind handelsüblich in flüssigen Mischkulturen erhältlich und bestehen aus Bakterienstämmen und fermentierten Pilzen. Die effektiven Mikroorganismen spalten im Pflanzsubstrat vorhandene Nährstoffe auf und erleichtern dem Keimling damit die Nährstoffaufnahme. Eine andere Möglichkeit sieht vor, dem Pflanzsubstrat getrocknete Mikroorganismen zuzusetzen, noch bevor es mit dem Bindemittel zu dem Festkörper verfestigt wird. Mikroorganismen sind für die Gesundheit des Keimlings von besonderer Bedeutung.

Für eine möglichst punktgenaue Ausbringung des erfindungsgemäßen Erzeugnisses wird vorgeschlagen, das Luftfahrzeug fernzusteuern. Unbemannte Luftfahrzeuge können als sogenannte Drohnen vorteilhaft klein und wendig ausgeführt sein, womit ein präziser Abwurf an vorbestimmten Geländepunkten maßgeblich vereinfacht ist.

Nach einer nächsten Weiterbildung der Erfindung wird das Erzeugnis in einer vorbestimmten Stückzahl mittels eines Abwurfplans abgeworfen. Mit dem Abwurfplan kann die Anzahl der pro Flächeneinheit in das Erdreich abzuwerfenden Erzeugnisse, ihre Anordnung zueinander und ihre Positionierung in Bezug auf vorbestimmte Geländepunkte festgelegt werden. Im Abwurfplan können auch artspezifische Bedürfnisse der aus den Pflanzensamen keimenden Pflanzen berücksichtigt werden.

Nach einer besonders vorteilhaften Weiterbildung der Erfindung wird der Abwurfplan anhand einer Kartierung des zu begrünenden Geländes erstellt. So können im Abwurfplan beispielsweise verschiedene Geländestrukturen wie Anhöhen, Senken, Steilkanten, Gewässer oder bereits vorhandene Vegetation berücksichtigt werden. Mit einer Kartierung des zu bewachsenden Geländes kann vorteilhaft verhindert werden, dass die erfindungsgemäßen Erzeugnisse an Geländepunkten abgeworfen werden, an denen der Pflanzsamen keine oder nur wenige Entwicklungsmöglichkeiten hat.

Die Effektivität des erfindungsgemäßen Verfahrens kann weiter verbessert werden, wenn der Abwurfplan mittels einer vom Luftfahrzeug mitgeführten Kameraüberwachung angepasst wird. Mit der Kameraüberwachung kann das Luftfahrzeug auf diverse Störgrößen reagieren, die sich einer Kartierung des zu begrünenden Geländes regelmäßig entziehen. Das sind insbesondere durch menschliche Einflussnahme kurzfristig entstandene Veränderungen der örtlichen Begebenheiten. Aber auch natürliche Veränderungen wie bestimmte Wetterereignisse, Erosionserscheinungen, Überflutungen oder Austrocknungen können mit einer Kameraüberwachung festgestellt und dann erforderlichenfalls in einem Abwurfplan berücksichtigt werden.

Der Abwurf des erfindungsgemäßen Erzeugnisses wird vorzugsweise satellitengestützt durchgeführt. Die Satellitennavigation ermöglicht dabei die genaue Positionsbestimmung des Luftfahrzeuges sowie eines mit dem Luftfahrzeug anzufahrenden Geländepunktes, an welchem das erfindungsgemäße Erzeugnis nach Vorgabe eines Abwurfplans abgeworfen werden soll.

Ein Ausführungsbeispiel, aus dem sich weitere erfinderische Merkmale ergeben, ist in der Zeichnung dargestellt. Es zeigen:
- Fig. 1:: eine perspektivische Ansicht des erfindungsgemäßen Erzeugnisses mit einem Ausbruch;
- Fig. 2:: eine perspektivische Ansicht des Erzeugnisses gemäß Fig. 1 beim Durchtränken mit Wasser;
- Fig. 3:: eine perspektivische Ansicht des durchtränkten Erzeugnisses gemäß Fig. 2, abgeworfen über dem Erdboden eines Geländes; und
- Fig. 4:: eine perspektivische Ansicht des Geländes gemäß Fig. 3, jedoch in einem vergrößerten Maßstab, einige Wochen nach dem Abwurf des Erzeugnisses.

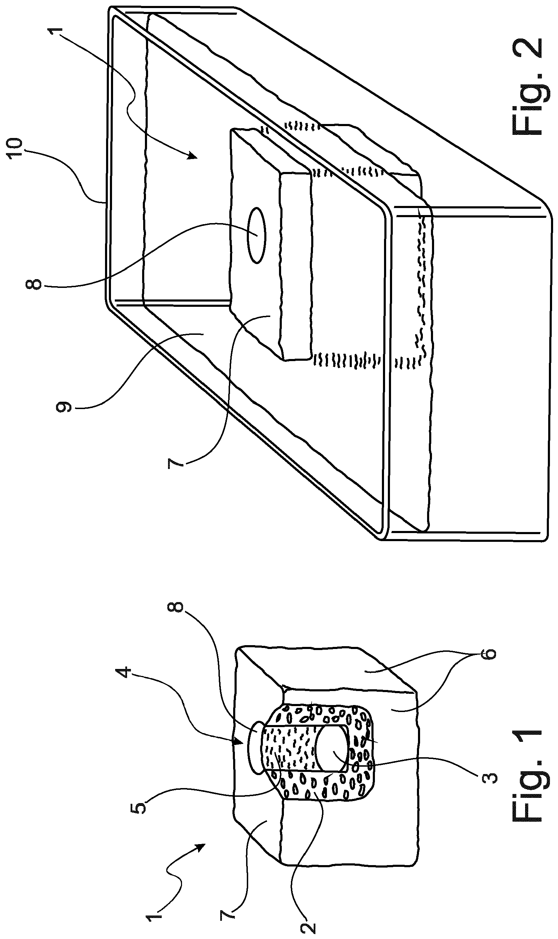

Die Figur 1 zeigt das erfindungsgemäße Erzeugnis zum Ansiedeln von Pflanzen in einem Gelände, mit einem Festkörper 1 aus einem Feststoffgemisch 2, welches aus einer Portion Pflanzsubstrat und einem als Bindemittel fungierenden Gummiarabikum zusammengesetzt ist. Im Inneren des eine kantige Körpergeometrie aufweisenden Festkörpers 1 befindet sich ein keimfähiger Pflanzensamen 3. Dazu hat der Festkörper 1 eine den Pflanzensamen 3 enthaltene Vertiefung 4, die mit einer Plombe 5 aus einem verfestigten Pflanzsubstrat verschlossen ist. Die kantige Körpergeometrie des Festkörpers 1 entspricht der eines Quaders mit sechs etwa planflächig ausgebildeten Oberflächen 6, 7. In einer der beiden potenziell als Auflageflächen fungierenden Oberflächen 7 ist die den Pflanzensamen 3 enthaltene Vertiefung 4 angeordnet. Die diese Vertiefung 4 verschließende Plombe 5 weist eine bündig mit der Oberfläche 7 abschließende Außenfläche 8 auf.

Die Figur 2 zeigt das Erzeugnis gemäß Figur 1 während seiner Durchtränkung mit einem mit Mikroorganismen geimpften Wasser 9 in einer Wasserschale 10. An seiner Vergrößerung ist zu erkennen, dass das Feststoffgemisch 2 bereits mit Wasser vollgesogen ist. Gleiche Elemente sind mit gleichen Bezugszahlen versehen.

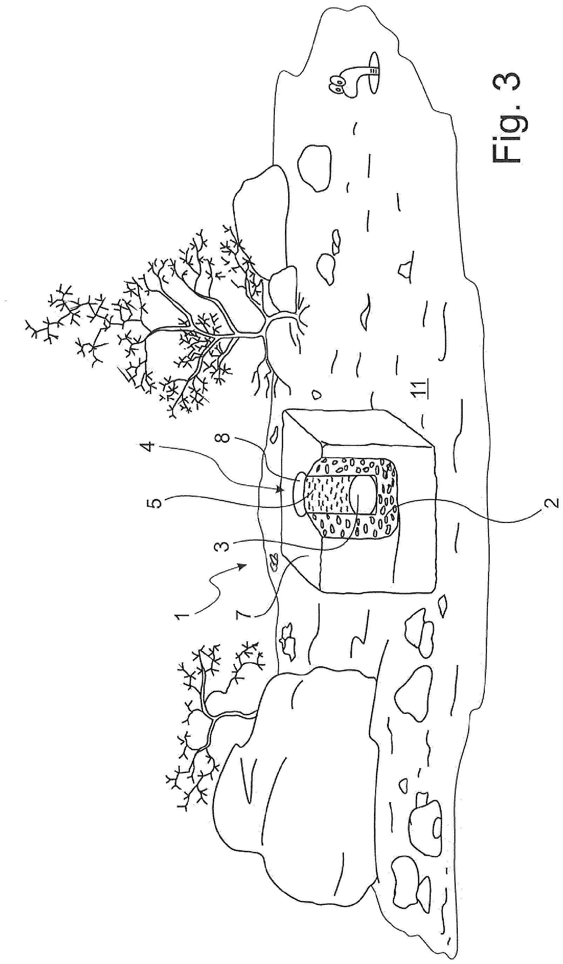

Die Figur 3 zeigt das durchtränkte Erzeugnis gemäß Figur 2 auf dem Bodengrund 11 eines ariden Geländes liegend, nachdem es von einem nicht dargestellten Luftfahrzeug abgeworfen wurde. Dabei ist der Festkörper 1 lediglich zufällig so zu liegen gekommen, dass seine die Vertiefung 4 umschließende Oberfläche 7 nach oben ausgerichtet ist. Gleiche Elemente sind mit gleichen Bezugszahlen versehen.

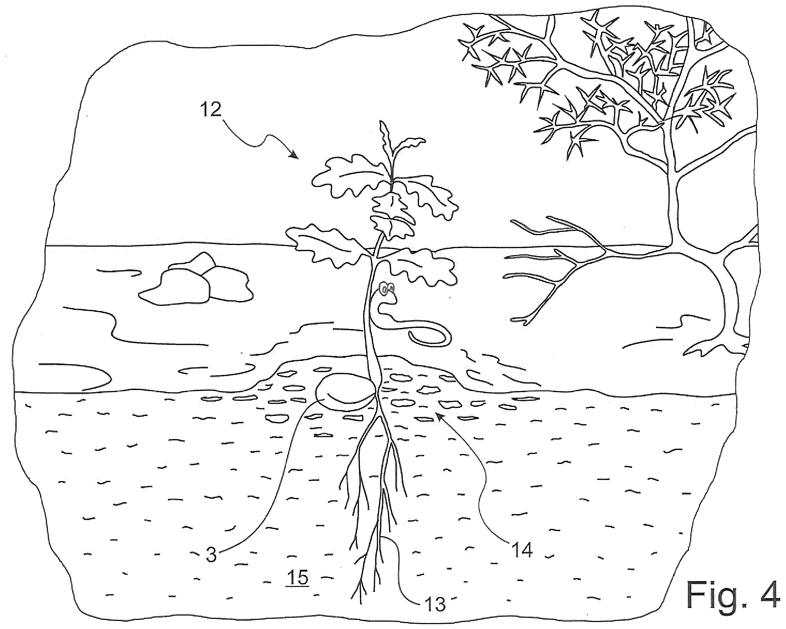

Die Figur 4 zeigt den Bodengrund 11 gemäß Figur 3 in einer vergrößerten Ansicht einige Monate nach dem Abwurf des Erzeugnisses. Aus dem Pflanzensamen 3 ist ein Baum 12 aufgekeimt, dessen Wurzeln 13 aus dem bereits zerfallenen Feststoffgemisch 14 in das darunter liegende Erdreich 15 eingedrungen sind.

## Patentansprüche

1. Erzeugnis zum Ansiedeln von Pflanzen in einem Gelände, mit einem Festkörper (1) aus einem Feststoffgemisch (2), welches aus einer Portion Pflanzsubstrat und wenigstens einem Bindemittel zusammengesetzt ist, und mit wenigstens einem im Inneren des Festkörpers (1) angeordneten keimfähigen Pflanzensamen (3),
**dadurch gekennzeichnet,**
**dass** das Bindemittel ein Gummiarabikum ist, und
**dass** der Festkörper (1) eine kantige Körpergeometrie aufweist.

2. Erzeugnis nach Anspruch 1, **dadurch gekennzeichnet, dass** der Festkörper (1) eine den Pflanzensamen (3) enthaltende Vertiefung (4) hat, die mit einer Plombe (5) aus einem verfestigten Pflanzsubstrat verschlossen ist.

3. Erzeugnis nach Anspruch 1 oder 2, **dadurch gekennzeichnet, dass** die kantige Körpergeometrie der einer Pyramide mit wenigstens vier planflächig ausgebildeten Oberflächen (6, 7) entspricht.

4. Erzeugnis nach Anspruch 1 oder 2, **dadurch gekennzeichnet, dass** die kantige Körpergeometrie der eines Keils mit wenigstens fünf planflächig ausgebildeten Oberflächen (6, 7) entspricht.

5. Erzeugnis nach Anspruch 1 oder 2, **dadurch gekennzeichnet, dass** die kantige Körpergeometrie der eines Quaders mit wenigstens sechs planflächig ausgebildeten Oberflächen (6, 7) entspricht.

6. Erzeugnis nach einem der Ansprüche 1 bis 5, **dadurch gekennzeichnet, dass** das Pflanzsubstrat torffreie organische Bestandteile sowie mineralische Bestandteile aufweist.

7. Verfahren zur Ausbringung des Erzeugnisses nach einem der Ansprüche 1 bis 6, in ein mit bestimmten Pflanzen zu bewachsendes Gelände,
**dadurch gekennzeichnet,**
**dass** das Erzeugnis mit Wasser (9) durchtränkt wird, und
**dass** das durchtränkte Erzeugnis mittels eines Luftfahrzeuges über dem zu bewachsenden Gelände abgeworfen wird.

8. Verfahren nach Anspruch 7, **dadurch gekennzeichnet, dass** das Wasser (9) vor dem Durchtränken des Erzeugnisses mit Mikroorganismen geimpft wird.

9. Verfahren nach Anspruch 7 oder 8, **dadurch gekennzeichnet, dass** das Luftfahrzeug ferngesteuert wird.

10. Verfahren nach einem der Ansprüche 7 bis 9, **dadurch gekennzeichnet, dass** das Erzeugnis in einer vorbestimmten Stückzahl anhand eines Abwurfplans abgeworfen wird.

11. Verfahren nach Anspruch 10, **dadurch gekennzeichnet, dass** der Abwurfplan anhand einer Kartierung des zu bewachsenden Geländes erstellt wird.

12. Verfahren nach Anspruch 10 oder 11, **dadurch gekennzeichnet, dass** der Abwurfplan mittels einer vom Luftfahrzeug mitgeführten Kameraüberwachung angepasst wird.

13. Verfahren nach einem der Ansprüche 7 bis 12, **dadurch gekennzeichnet, dass** der Abwurf des Erzeugnisses satellitengestützt durchgeführt wird.
